# EUROPÄISCHE PATENTSCHRIFT

(11) **EP 4 348 189 B1**
(45) Veröffentlichungstag und Bekanntmachung des Hinweises auf die Patenterteilung: **26.02.2025**
(21) Anmeldenummer: 22730430.0
(22) Anmeldetag: 23.05.2022
(51) Int. Cl.: G01F 11/36, G01F 15/00, B67D 1/00, B67D 1/12, G05D 7/06

(54) **HAUSHALTSGERÄTEANORDNUNG MIT EINER DOSIEREINRICHTUNG ZUR EINSTELLUNG UND/ODER REGELUNG EINES GASFLUSSES, UND VERFAHREN ZUR EINSTELLUNG UND/ODER REGELUNG EINES GASFLUSSES**
HOUSEHOLD APPLIANCE ARRANGEMENT INCLUDING A DOSING DEVICE FOR ADJUSTMENT AND/OR REGULATION OF A GAS FLOW, AND PROCESS FOR ADJUSTMENT AND/OR REGULATION OF A GAS FLOW
ARRANGEMENT D'APPAREIL MÉNAGER AVEC UN DISPOSITIF DE DOSAGE POUR L'AJUSTEMENT ET/OU LA RÉGULATION D'UN DÉBIT DE GAZ, ET PROCÉDÉ D'AJUSTEMENT ET/OU DE RÉGULATION D'UN DEBIT DE GAZ

(30) Priorität: 26.05.2021 DE 102021205360
(43) Veröffentlichungstag der Anmeldung: 10.04.2024
(73) Patentinhaber: Eugster/Frismag AG, 8580 Amriswil (CH)
(72) Erfinder: SCHWARZ, Kasimir, 8274 Tägerwilen (CH); SONDEREGGER, Remo, 8274 Tägerwilen (CH)
(74) Vertreter: Kutzenberger Wolff & Partner
(86) Internationale Anmeldenummer: PCT/EP2022/063862
(87) Internationale Veröffentlichungsnummer: WO 2022/248391

(56) Entgegenhaltungen:
- WO-A2-2014/152755
- DE-A1- 3 103 956
- US-A- 4 665 809
- US-A1- 2004 238 040
- US-A1- 2014 158 211
- US-A1- 2016 229 675
- US-A1- 2020 207 603

## Beschreibung

Die vorliegende Erfindung geht aus von einer Haushaltsgeräteanordnung mit einem Haushaltsgerät und einer Dosiereinrichtung zur Einstellung und/oder Regelung eines Gasflusses. Ferner betrifft die vorliegende Erfindung ein Verfahren zur Einstellung und/oder Regelung eines Gasflusses mithilfe einer Dosiereinrichtung.

Systeme zur Dosierung von Gas sind allgemein bekannt, wie beispielsweise aus der US 2020 / 207 603 A1. Derartige Dosiereinrichtungen dienen dazu, einen Gasfluss einzustellen. Beispielsweise kann ein Gasmengenfluss mittels eines Druckreduzierventils (mit oder ohne Anzeige des Ausgangsdrucks), eines Drosselventils, einer Drosselblende oder eines Magnetventils auf einen Wert eingestellt werden. Der aktuelle Gasmengenfluss wird dabei typischerweise nicht quantifiziert.

Gasdosiereinrichtungen werden beispielsweise als Teil von Haushaltsgeräten, wie unterschiedlichen Lebensmittelzubereitungsmaschinen, verwendet.

Nachteilig bei bekannten Systemen ist, dass ein Gasmengenfluss meist nicht variabel und dennoch präzise eingestellt werden kann. Beispielsweise ist es mit bekannten Systemen typischerweise nicht möglich, für den Bereich von vergleichsweise kleinen Gasflussmengen ein kompaktes, kostengünstiges und variabel einstellbares Gasdosiersystem bereitzustellen.

### Offenbarung der Erfindung

Es ist daher eine Aufgabe der vorliegenden Erfindung, eine Haushaltsgeräteanordnung mit einer vorteilhaften Dosiereinrichtung zur

Einstellung und/oder Regelung eines Gasflusses zur Verfügung zu stellen, die insbesondere eine variable Einstellung des Gasflusses kosteneffizient und/oder mit erhöhtem Nutzerkomfort ermöglicht.

Die Aufgabe der vorliegenden Erfindung wird gelöst durch eine Haushaltsgeräteanordnung gemäß den Merkmalen des Anspruchs 1.

Die erfindungsgemäße Dosiereinrichtung hat gegenüber dem Stand der Technik den Vorteil, dass ein kompaktes und kostengünstiges Gasdosiersystem bereitgestellt werden kann, mit welchem ein Gasfluss variabel und präzise eingestellt werden kann.

Die erfindungsgemäße Dosiereinrichtung kann in vorteilhafter Weise für verschiedene Gasmedien verwendet werden, wodurch sich besonders flexible Einsatzmöglichkeiten ergeben.

Das Gasfluss kann erfindungsgemäß insbesondere als Gasmengenfluss verstanden werden und ein Gas oder mehrere Gase umfassen.

Erfindungsgemäß ist es in vorteilhafter Weise möglich, dass - insbesondere durch eine elektrische Ansteuerung der Gasdosiereinrichtung - der Gasmengenfluss innerhalb eines bestimmten Einstellbereichs vorgegeben und quantifiziert werden kann, ohne dass eine direkte Mengenmessung dazu nötig ist.

Erfindungsgemäß ist es vorteilhafterweise möglich, dass für eine Veränderung des Gasmengenflusses keine mechanische Verstellung eines Ventils durch einen Benutzer nötig ist. Ein besonderer Vorteil ist, dass mithilfe der erfindungsgemäßen Dosiereinrichtung auch ein verhältnismäßig kleiner Gasmengenfluss, erfindungsgemäß im Bereich von 0 bis 10 g/min, ohne eine mechanische Betätigung durch einen Nutzer variabel eingestellt werden kann. Hierdurch eignet sich die erfindungsgemäße Dosiereinrichtung besonders vorteilhaft für den Einsatz in Haushaltsgeräten. Bevorzugt ist mithilfe der erfindungsgemäßen Dosiereinrichtung ein Gasmengenfluss im Bereich von 0 bis 7 g/min einstellbar.

Durch die erfindungsgemäße Ausgestaltung der Dosiereinrichtung ist es besonders vorteilhaft möglich, dass Druckschwankungen am Eingang und/oder Ausgang der Dosiereinrichtung keinen oder lediglich einen geringen Einfluss auf den Gasmengenfluss haben, da diese zumindest teilweise kompensiert werden können.

Es ist denkbar, dass mit der erfindungsgemäßen Dosiereinrichtung der Gasfluss stufenlos oder mit Abstufungen, insbesondere exakt, eingestellt werden kann.

Erfindungsgemäß ist es denkbar, dass die Dosiereinrichtung eine Steuerungseinrichtung umfasst und/oder dass der Dosiereinrichtung eine externe Steuerungseinrichtung zugeordnet ist. Die Steuerungseinrichtung umfasst insbesondere elektrische Schaltungsmittel und/oder Computermittel zur Ansteuerung und/oder Einstellung der Dosiereinrichtung, insbesondere zur Ansteuerung und/oder Einstellung des elektrisch ansteuerbaren Ventils (beispielsweise eines Magnetventils).

Es ist erfindungsgemäß denkbar, dass die Gasdurchlassöffnung mithilfe einer Messblende ausgebildet ist.

Gemäß vorliegenden Erfindung weist die Dosiereinrichtung einen Drucksensor auf, wobei mithilfe des Drucksensors eine Gasdruckdifferenz über eine Gasdurchlassöffnung der Dosiereinrichtung messbar ist, wobei das elektrisch ansteuerbare Ventil in Abhängigkeit der gemessenen Gasdruckdifferenz einstellbar ist. Hierdurch ist es möglich, dass eine aktuelle Gasdruckdifferenz in der Dosiereinrichtung gemessen wird und dass aus der gemessenen aktuellen Gasdruckdifferenz Rückschlüsse auf den aktuellen Gasmengenfluss gezogen werden. Das elektrisch ansteuerbare Ventil kann dann anhand der ermittelten aktuellen Gasdruckdifferenz und/oder des aktuellen Gasmengenflusses geregelt werden, sodass sich ein Zielwert für den Gasmengenfluss einstellt. Gemäß einer Ausführungsform der vorliegenden Erfindung ist es denkbar, dass der aktuelle Gasmengenfluss durch die Dosiereinrichtung quantifiziert wird, wodurch eine verbesserte Einstellung bzw. Regelung des Gasflusses auf einen gewünschten Wert ermöglicht wird. Gemäß der vorliegenden Erfindung ist es somit in vorteilhafter Weise möglich, dass die messbare Gasdruckdifferenz (bzw. der Differenzdruck) der Dosiereinrichtung genutzt wird, um den Gasfluss (bzw. die Gasflussmenge) zu quantifizieren, insbesondere auf Basis von empirisch ermittelten Daten des gesamten Einstellbereichs des elektrisch ansteuerbaren Ventils und/oder der Ansteuerung des elektrisch ansteuerbaren Ventils sowie ggf. toleranzbedingter Performance-Abweichungen. Der Drucksensor ist insbesondere ein Differenzdrucksensor, mit dessen Hilfe eine Differenz des Drucks auf einer Eingangsseite der Gasdurchlassöffnung und einer Ausgangsseite der Gasdurchlassöffnung messbar ist.

Gemäß der vorliegenden Erfindung umfasst die Dosiereinrichtung eine verstellbare Druckregelungseinrichtung, wobei mithilfe der verstellbaren Druckregelungseinrichtung eine maximale Gasdruckdifferenz zwischen einem Eingangsbereich der Dosiereinrichtung und einem Ausgangsbereich der Dosiereinrichtung einstellbar ist, wobei der mithilfe des elektrisch ansteuerbaren Ventils einstellbare Gasfluss durch die Dosiereinrichtung durch die mithilfe der verstellbaren Druckregelungseinrichtung eingestellte maximale Gasdruckdifferenz zwischen dem Eingangsbereich der Dosiereinrichtung und dem Ausgangsbereich der Dosiereinrichtung begrenzt ist. Mithilfe der Druckregelungseinrichtung (beispielsweise mithilfe eines Membrandruckreglers und/oder eines Kolbendruckreglers) kann somit eine konstante oder zumindest näherungsweise konstante maximale Gasdruckdifferenz einstellbar sein. Hierdurch kann eine präzise Regelung des Gasflusses mithilfe des elektrisch ansteuerbaren Ventils auch dann durchgeführt werden, wenn an den Anschlüssen (Eingang und Ausgang) der Dosiereinrichtung Vorrichtungen mit unterschiedlichen, insbesondere sich ändernden und/oder variierenden, Drücken angeschlossen werden. Gemäß der vorliegenden Erfindung ist es somit in vorteilhafter Weise möglich, dass eine konstante Gasdruckdifferenz (bzw. ein konstanter Differenzdruck) in der Dosiereinrichtung mithilfe der Druckregelungseinrichtung ausgebildet wird. Es ist dabei möglich, dass die konstante maximale Gasdruckdifferenz der Dosiereinrichtung genutzt wird, um den Gasfluss (bzw. die Gasflussmenge) zu quantifizieren, insbesondere auf Basis von empirisch ermittelten Daten des gesamten Einstellbereichs des elektrisch ansteuerbaren Ventils und/oder der Ansteuerung des elektrisch ansteuerbaren Ventils sowie ggf. toleranzbedingter Performance-Abweichungen. Mithilfe der verstellbaren Druckregelungseinrichtung ist es dabei insbesondere möglich, einen Membrandruckregler und/oder einen Kolbendruckregler auszubilden, der zur Einstellung einer konstanten oder zumindest näherungsweise konstanten maximalen Druckdifferenz zwischen einem Eingangsbereich der Dosiereinrichtung und einem Ausgangsbereich der Dosiereinrichtung eingerichtet ist.

Gemäß der vorliegenden Erfindung ist es möglich, dass der maximale Differenzdruck (bzw. maximale Gasdruckdifferenz) zwischen dem Eingangsbereich und dem Ausgangsbereich der Dosiereinrichtung somit bevorzugt durch die geometrischen Eigenschaften der Dosiereinrichtung, insbesondere mithilfe der verstellbaren Druckregelungseinrichtung, auf einen bestimmten Maximalwert, erfindungsgemäß zwischen 0,01 und 2,00 bar, beschränkt wird. Der Maximalwert kann dabei so gewählt werden, dass der Maximalwert dem maximalen Gasmengenfluss entspricht, der für eine bestimmte Anwendung gewünscht ist. Es ist dabei ein besonderer Vorteil, dass der Gasmengenfluss auch dann exakt gesteuert werden kann, wenn der absolute Gasdruck auf der Eingangs- und/oder der Ausgangsseite der Dosiereinrichtung nicht immer auf dem gleichen Level bzw. nicht konstant ist, d.h. es besteht keine oder zumindest keine starke Abhängigkeit von der vorhandenen Druckdifferenz des absoluten Drucks am Eingang und am Ausgang. Es ist hierbei besonders vorteilhaft, dass für die korrekte Funktion der Dosiereinrichtung sichergestellt wird, dass der absolute Gasdruck am Eingang der Dosiereinrichtung, insbesondere an einem ersten Gasanschluss der Dosiereinrichtung, mindestens um die mithilfe der verstellbaren Druckregelungseinrichtung eingestellte maximale Gasdruckdifferenz höher ist als der absolute Druck auf der Ausgangsseite der Dosiereinrichtung, insbesondere an einem zweiten Gasanschluss der Dosiereinrichtung.

Es kann somit eine präzise und vorteilhafte Einstellung eines Gasflusses erfolgen, wobei die Dosiereinrichtung insbesondere kompakt und kosteneffizient eingerichtet sein kann und wobei besonders vorteilhaft während des Betriebs der Dosiereinrichtung kein mechanisches Verstellen eines Ventils durch einen Nutzer nötig ist.

Vorteilhafte Ausgestaltungen und Weiterbildungen der Erfindung sind den Unteransprüchen, sowie der Beschreibung unter Bezugnahme auf die Zeichnungen entnehmbar. Die zu diesem Gegenstand der vorliegenden Erfindung gehörigen Ausführungen gelten auch für die weiteren Gegenstände der vorliegenden Erfindung und umgekehrt.

Gemäß einer Ausführungsform der vorliegenden Erfindung ist es vorgesehen, dass die verstellbare Druckregelungseinrichtung mithilfe einer verstellbaren Membran und/oder mithilfe eines verstellbaren Kolbens ausgebildet ist. Somit sind vorzugsweise ein Membrandruckregler und/oder Kolbendruckregler ausgebildet. Insbesondere umfasst die Druckregelungseinrichtung somit bevorzugt einen Membrandruckminderer und/oder einen Kolbendruckminderer.

Gemäß einer Ausführungsform der vorliegenden Erfindung ist es vorgesehen, dass die verstellbare Druckregelungseinrichtung, insbesondere die verstellbare Membran und/oder der verstellbare Kolben, mithilfe eines Justiermittels mechanisch verstellbar ist, insbesondere derart, dass die maximale Gasdruckdifferenz zwischen dem Eingangsbereich der Dosiereinrichtung und dem Ausgangsbereich der Dosiereinrichtung über das Justiermittel einstellbar ist. Es ist vorzugsweise denkbar, dass mithilfe des Justiermittels ein Druck auf die Membran und/oder den Kolben einstellbar ist. Es ist vorzugsweise denkbar, dass mithilfe des Justiermittels die Membran und/oder der Kolben auslenkbar sind. Es ist beispielsweise denkbar, dass die Membran mithilfe des Justiermittels biegbar ist. Mithilfe der Auslenkung der Membran und/oder des Kolbens ist dabei die maximale Gasdruckdifferenz zwischen dem Eingangsbereich der Dosiereinrichtung und dem Ausgangsbereich der Dosiereinrichtung einstellbar und somit der maximale Gasfluss durch die Dosiereinrichtung, insbesondere auf einen Maximalwert, begrenzbar. Es ist gemäß einer bevorzugten Ausführungsform der vorliegenden Erfindung denkbar, dass das Justiermittel eine Justierschraube umfasst, wobei mithilfe der Justierschraube die Auslenkung der Membran und/oder des Kolbens einstellbar ist. Das Justiermittel ist insbesondere Teil der Dosiereinrichtung und/oder mit der Dosiereinrichtung verbindbar.

Gemäß einer Ausführungsform der vorliegenden Erfindung ist es vorgesehen, dass das elektrisch ansteuerbare Ventil, insbesondere in Abhängigkeit der gemessenen Gasdruckdifferenz, derart einstellbar ist, dass ein Zielwert für die Gasdruckdifferenz über die Gasdurchlassöffnung und/oder ein Zielwert für den Gasfluss durch die Dosiereinrichtung, insbesondere durch die Gasdurchlassöffnung, einstellbar ist. Das elektrisch ansteuerbare Ventil wird insbesondere in Abhängigkeit der mithilfe des Drucksensors gemessenen Gasdruckdifferenz eingestellt. Der Gasfluss durch die Dosiereinrichtung ist insbesondere abhängig von der Gasdruckdifferenz über die Gasdurchlassöffnung. Es ist denkbar, dass der Zielwert für den Gasfluss und/oder der Zielwert für die Gasdruckdifferenz mithilfe eines Eingabemittels der Dosiereinrichtung oder eines Eingabemittels einer mit der Dosiereinrichtung in Kommunikationsverbindung stehenden Vorrichtung durch einen Nutzer bereitgestellt, gewählt und/oder eingegeben werden kann. Die Einstellung und Ansteuerung des elektrisch ansteuerbaren Ventils wird vorzugsweise mithilfe der Steuerungseinrichtung der Dosiereinrichtung durchgeführt.

Gemäß einer Ausführungsform der vorliegenden Erfindung ist es vorgesehen, dass der Gasfluss durch die Dosiereinrichtung mithilfe von Referenzdaten ermittelbar und/oder einstellbar ist, wobei die Referenzdaten insbesondere einen Zusammenhang zwischen der Gasdruckdifferenz über die Gasdurchlassöffnung und dem Gasfluss durch die Dosiereinrichtung betreffen. Besonders vorteilhaft ist es möglich, dass durch die Steuerungseinrichtung der Dosiereinrichtung das elektrisch verstellbare Ventil (beispielsweise ein Magnetventil) derart auf Grundlage der Referenzdaten angesteuert wird, dass sich der Zielwert für den Gasfluss durch die Dosiereinrichtung einstellt. Es ist gemäß einer Ausführungsform der vorliegenden Erfindung insbesondere denkbar, dass die Referenzdaten ein Verhältnis zwischen der Gasdruckdifferenz über die Gasdurchlassöffnung und dem Gasfluss durch die Dosiereinrichtung angeben. Die Referenzdaten betreffen insbesondere ein bestimmtes Gas oder Gasgemisch bzw. hängen von dem bestimmten Gas oder Gasgemisch ab.

Es ist in vorteilhafter Weise möglich, eine einzige Dosiereinrichtung für verschiedene Gasmedien zu verwenden, wobei sich die Flussmenge je nach Gas unterscheiden lässt, insbesondere sofern eine entsprechende Kennlinie oder entsprechende Kennlinien für ein bestimmtes Gasmedium in der Software der Steuerungseinrichtung abgebildet und berücksichtigt wird oder werden. Somit werden vorzugsweise entsprechende Referenzdaten für eine bestimmtes Gas oder Gasgemisch in der Steuerungseinrichtung oder einer mit der Steuerungseinrichtung in Kommunikationsverbindung stehenden Speichereinrichtung hinterlegt.

Gemäß einer Ausführungsform der vorliegenden Erfindung ist es bevorzugt vorgesehen, dass das elektrisch ansteuerbare Ventil ein Magnetventil umfasst oder ist. Mithilfe eines Magnetventils ist eine präzise Steuerung und Regelung möglich. Als Alternative oder zusätzlich zu einem Magnetventil ist es beispielsweise denkbar, dass das elektrisch ansteuerbare Ventil einen Motorantrieb aufweist.

Gemäß einer Ausführungsform der vorliegenden Erfindung ist es bevorzugt vorgesehen, dass das elektrisch ansteuerbare Ventil, insbesondere das Magnetventil, mithilfe einer Steuerungseinrichtung ansteuerbar ist.

Gemäß einer Ausführungsform der vorliegenden Erfindung ist es vorgesehen, dass das Magnetventil ein 2/2-Wegeventil aufweist, welches mithilfe der Steuerungseinrichtung mit einer, insbesondere festen oder variablen, Frequenz und einer variablen Einschaltdauer, ansteuerbar ist, insbesondere derart, dass der Gasfluss durch die Dosiereinrichtung mithilfe einer Wahl der Einschaltdauer einstellbar ist,
oder
wobei das Magnetventil ein 2/2-Wege-Proportionalventil aufweist, bei welchem über eine Ansteuerung mithilfe der Steuerungseinrichtung ein variabler Öffnungsquerschnitt am Ventilsitz des Magnetventils einstellbar ist, insbesondere derart, dass der Gasfluss durch die Dosiereinrichtung mithilfe einer Wahl des Öffnungsquerschnitts am Ventilsitz einstellbar ist.

Es ist insbesondere denkbar, dass es sich bei dem 2/2-Wegeventil um ein Öffnungs- und Schließventil handelt, welches den Weg des Arbeitsmediums, also insbesondere des Gases oder Gasgemisches, öffnen und schließen kann. Dass das 2/2-Wegeventil mithilfe der Steuerungseinrichtung mit einer, insbesondere festen oder variablen, Frequenz und einer variablen Einschaltdauer, ansteuerbar ist, kann gemäß einer Ausführungsform vorzugsweise auch derart verstanden werden, dass das 2/2-Wegeventil mithilfe der Steuerungseinrichtung mit einem variablen Tastgrad ansteuerbar ist, insbesondere derart, dass der Gasfluss durch die Dosiereinrichtung mithilfe einer Wahl des Tastgrads einstellbar ist.

Für das 2/2-Wege-Proportionalventil ist es vorzugsweise denkbar, dass 2/2-Wege-Proportionalventil einen variablen und insbesondere einstellbaren Öffnungsquerschnitt umfasst. Durch Ansteuerung des 2/2-Wege-Proportionalventils durch die Steuerungseinrichtung ist der Öffnungsquerschnitt änderbar. Der sich einstellende Gasfluss hängt insbesondere von dem eingestellten Öffnungsquerschnitt ab.

Gemäß der vorliegenden Erfindung ist es vorgesehen, dass die mithilfe der verstellbaren Druckregelungseinrichtung einstellbare maximale Gasdruckdifferenz zwischen dem Eingangsbereich der Dosiereinrichtung und dem Ausgangsbereich der Dosiereinrichtung einem festlegbaren Maximalwert zwischen einschließlich 0,01 bar und einschließlich 2,00 bar entspricht. Hierdurch kann eine besonders vorteilhafte Anwendbarkeit für vergleichsweise geringe Gasmengenflüsse erreicht werden, wie sie beispielsweise bei Haushaltsgeräten von Interesse sind. Somit kann eine Dosiereinrichtung mit hoher Präzision und Güte für die Anwendung im Zusammenhang mit vergleichsweise geringen Gasflussmengen erreicht werden.

Gemäß einer Ausführungsform der vorliegenden Erfindung ist es vorgesehen, dass die einstellbare maximale Gasdruckdifferenz in Abhängigkeit eines wählbaren maximalen Gasflusses bestimmt ist. Der wählbare maximale Gasfluss kann beispielsweise von der spezifischen Anwendung der Dosiereinrichtung abhängen und mithilfe der Membran eingestellt werden.

Gemäß einer Ausführungsform der vorliegenden Erfindung ist es vorgesehen, dass die Dosiereinrichtung ein Rückschlagventil umfasst. Das Rückschlagventil ist insbesondere dafür vorgesehen, den Gasfluss von einem Eingang der Dosiereinrichtung zu einem Ausgang der Dosiereinrichtung zu ermöglichen und einen entgegengesetzten Gasfluss vom Ausgang der Dosiereinrichtung zum Eingang der Dosiereinrichtung zu unterbinden. Hierdurch kann für eine Vielzahl von Anwendungen eine verbesserte Sicherheit erreicht werden.

Ein weiterer Gegenstand der vorliegenden Erfindung ist ein Verfahren nach Anpruch 13 zur Einstellung und/oder Regelung eines Gasflusses mithilfe einer Dosiereinrichtung gemäß einer Ausführungsform der vorliegenden Erfindung,
-- wobei die Dosiereinrichtung einen Drucksensor aufweist, wobei mithilfe des Drucksensors eine Gasdruckdifferenz über eine Gasdurchlassöffnung der Dosiereinrichtung gemessen wird, wobei das elektrisch ansteuerbare Ventil in Abhängigkeit der gemessenen Gasdruckdifferenz eingestellt wird;
   und
-- wobei die Dosiereinrichtung eine verstellbare Druckregelungseinrichtung umfasst, wobei mithilfe der verstellbaren Druckregelungseinrichtung eine maximale Gasdruckdifferenz zwischen einem Eingangsbereich der Dosiereinrichtung und einem Ausgangsbereich der Dosiereinrichtung eingestellt wird, wobei der mithilfe des elektrisch ansteuerbaren Ventils einstellbare Gasfluss durch die Dosiereinrichtung durch die mithilfe der verstellbaren Druckregelungseinrichtung eingestellte maximale Gasdruckdifferenz zwischen dem Eingangsbereich der Dosiereinrichtung und dem Ausgangsbereich der Dosiereinrichtung begrenzt ist.

Hierdurch kann eine besonders effiziente und flexible Einstellung und/oder Regelung eines Gasflusses erreicht werden. Besonders vorteilhaft ist eine präzise Einstellung und/oder Regelung eines Gasflusses selbst dann möglich, wenn Schwankungen des absoluten Drucks an der Eingangsseite der Dosiereinrichtung und/oder Schwankungen des absoluten Drucks an der Ausgangsseite der Dosiereinrichtung vorliegen. Somit ist eine präzise Einstellung und/oder Regelung eines Gasflusses selbst dann möglich, wenn der Gasdruck der an der Eingangsseite der Dosiereinrichtung angeschlossenen Vorrichtung (beispielsweise eine Gasflasche, Gaskartusche oder Gaszuleitung) und/oder der Gasdruck der an der Ausgangsseite der Dosiereinrichtung angeschlossenen Vorrichtung (beispielsweise ein Verbrauchergerät) schwankt. Hierdurch kann auch dann, wenn die Gasdruckdifferenz der an der Eingangsseite und Ausgangseite angeschlossenen Vorrichtungen nicht konstant ist, sich also beispielsweise mit der Zeit ändert oder schwankt, eine vorteilhafte Einstellung und/oder Regelung des Gasflusses erreicht werden.

Gemäß einer Ausführungsform der vorliegenden Erfindung ist es vorgesehen, dass der Gasfluss durch ein Gas oder ein Gasgemisch gebildet ist, wobei für einen gegebenen Gasdurchlassquerschnitt der Gasdurchlassöffnung und für das Gas oder das Gasgemisch Referenzdaten, insbesondere eine Verlaufskurve des Gasflusses in Abhängigkeit der gemessenen Gasdruckdifferenz über die Gasdurchlassöffnung, ermittelt werden,
wobei das elektrisch ansteuerbare Ventil in Abhängigkeit der Referenzdaten derart angesteuert und/oder eingestellt wird, dass die sich einstellende Gasdruckdifferenz über die Gasdurchlassöffnung einem wählbaren Gasfluss entspricht. Die sich einstellende Gasdruckdifferenz über die Gasdurchlassöffnung kann gemäß einer Ausführungsform der vorliegenden Erfindung auch als eine mittlere Gasdruckdifferenz verstanden werden (beispielsweise über eine oder mehrere Takte bzw. Perioden eines 2/2-Wegeventils gemittelt).

Wenn die Referenzdaten bzw. die Verlaufskurve einmal ermittelt wurden, kann - für einen gewünschten bzw. auswählbaren Gasfluss - das elektrisch ansteuerbare Ventil (beispielsweise ein Magnetventil) anhand der Referenzdaten bzw. Verlaufskurve so eingestellt werden, dass sich die Gasdruckdifferenz die Gasdurchlassöffnung ergibt, die dem gewünschten bzw. auswählbaren Gasfluss entspricht.

Die Bestimmung der Referenzdaten kann in einer Vorlaufphase unter Verwendung der Dosiereinrichtung erfolgen. Alternativ ist es denkbar, dass die Referenzdaten mithilfe einer weiteren Dosiereinrichtung erfolgen. Die weitere Dosiereinrichtung ist dabei besonders bevorzugt eine baugleiche oder ähnliche Vorrichtung wie die Dosiereinrichtung. Die Verlaufskurve entspricht bevorzugt dem Verhältnis von Gasdifferenzdruck zu Gasmengenfluss.

Es ist denkbar, dass die Bestimmung der Referenzdaten beispielsweise in der Vorlaufphase unter Verwendung der Dosiereinrichtung oder der weiteren Dosiereinrichtung derart erfolgt, dass (insbesondere für ein bestimmtes Gas oder Gasgemisch) der Gasfluss in Abhängigkeit einer Ansteuerung des elektrisch ansteuerbaren Ventils bestimmt und/oder ermittelt wird, beispielsweise mithilfe einer externen Prüf- und/oder Kalibriereinrichtung. Auf Grundlage dieser Referenzdaten kann im Betrieb der Dosiereinrichtung eine präzise und vorteilhafte Einstellung des Gasflusses durch eine entsprechende Ansteuerung des elektrisch ansteuerbaren Ventils erfolgen, insbesondere weil mithilfe der Druckregelungseinrichtung während des Betriebs der Dosiereinrichtung sichergestellt werden kann, dass eine zumindest annähernd konstante maximale Gasdruckdifferenz zwischen einem Eingangsbereich der Dosiereinrichtung und einem Ausgangsbereich der Dosiereinrichtung vorliegt. Für den Fall, dass die Dosiereinrichtung die Druckregelungseinrichtung umfasst, ist es daher gemäß einer besonders bevorzugten Ausführungsform möglich, dass für einen bestimmten Gasdurchlassquerschnitt beim Ventilsitz des Magnetventils oder bei einer Blende und ein bestimmtes Gas oder Gasgemisch mit empirischen Daten eine Verlaufskurve erstellt wird, die dem Verhältnis vom Tastverhältnis (im Falle eines 2/2-Wegeventils) oder vom Öffnungsquerschnitt (im Falle eines 2/2-Wege-Proportionalventils) zu dem Gasmengenfluss entspricht. Wenn diese Verlaufskurve einmal ermittelt wurde, kann das Magnetventil so gesteuert werden, dass sich ein gewünschter Gasmengenfluss einstellt.

Es ist vorzugsweise denkbar, dass der Gasfluss (bzw. Gasmengenfluss) annähernd proportional zu der gemessenen Gasdruckdifferenz ist, welche sich über der Gasdurchlassöffnung der Messblende einstellt. Für einen bestimmten Gasdurchlassquerschnitt in der Messblende und ein bestimmtes Gas kann mit empirischen Daten eine Verlaufskurve erstellt werden, die dem Verhältnis von Gasdruckdifferenz zu Gasmengenfluss entspricht. Wenn diese Verlaufskurve einmal ermittelt wurde, kann das elektrisch ansteuerbare Ventil (beispielsweise ein Magnetventil) so gesteuert bzw. geregelt werden, dass der (mittlere) Differenzdruck dem gewünschten Gasmengenfluss entspricht.

Gemäß einer Ausführungsform der vorliegenden Erfindung ist es denkbar, dass die verstellbare Druckregelungseinrichtung, insbesondere mithilfe einer Prüf- und/oder Kalibriervorrichtung und insbesondere mithilfe des Justiermittels, derart eingestellt, und insbesondere fixiert, wird, dass bei einer vollständig geöffneten Stellung des elektrisch ansteuerbaren Ventils die einstellbare maximale Gasdruckdifferenz zwischen dem Eingangsbereich und dem Ausgangsbereich vorliegt. Somit kann eine vorteilhafte Einstellung der verstellbaren Druckregelungseinrichtung (insbesondere der Membran und/oder des Kolbens) durchgeführt werden, sodass die verstellbare Druckregelungseinrichtung im späteren Betrieb der Dosiervorrichtung den Gasfluss unabhängig von einer aktuellen Einstellung des elektrisch ansteuerbaren Ventils begrenzt.

Es ist denkbar, dass der Gasfluss durch CO₂ gebildet ist oder CO₂ umfasst. Die Verwendung von CO₂ ist beispielsweise für eine Karbonisierungsmaschine, insbesondere eine Getränkezubereitungsmaschine, denkbar. Es kommen für andere Anwendungen der Dosiereinrichtung jedoch auch andere Gase oder Gasgemische infrage.

Gemäß vorliegenden Erfindung ist es vorgesehen, dass der wählbare Gasfluss in einem Bereich von einschließlich 0 g/min bis 10 g/min, besonders bevorzugt 0 g/min bis mindestens 7 g/min, auswählbar und/oder einstellbar ist, insbesondere durch einen Nutzer.

Gemäß einer Ausführungsform der vorliegenden Erfindung ist es vorgesehen, dass das Haushaltsgerät eine Getränkezubereitungsmaschine ist, wobei ein Getränk und/oder eine Vorsubstanz zur Zubereitung eines Getränks mithilfe der Dosiereinrichtung mit einem Gas oder Gasgemisch, insbesondere mit CO₂, versetzbar ist, wobei der Gasfluss des Gases oder Gasgemischs mithilfe der Dosiereinrichtung einstellbar ist. Bei der Getränkezubereitungsmaschine kann es sich insbesondere um eine Karbonisierungsmaschine, einen Trinkwasserspender und/oder - sprudler, und/oder eine Kaltgetränkemaschine handeln. Es ist denkbar, dass ein Nutzer über ein Eingabemittel, insbesondere ein Interface, der Getränkezubereitungsmaschine ein Getränk mit einem bestimmten CO₂-Gehalt auswählen kann, wobei die gewünschte CO₂-Menge während des Getränkebezugs über die Dosiereinrichtung dem Wasser und/oder der Getränkesubstanz und/oder Vorsubstanz direkt (in-line) hinzugefügt wird.

Gemäß einer Ausführungsform der vorliegenden Erfindung ist es vorgesehen, dass das Haushaltsgerät eine Gasgrilleinrichtung ist, wobei mithilfe der Dosiereinrichtung ein Gasfluss der Gasgrilleinrichtung einstellbar ist. Es ist insbesondere denkbar, dass die Gasgrilleinrichtung ein Eingabemittel, insbesondere ein Interface, umfasst, wobei die Gasgrilleinrichtung derart eingerichtet ist, dass ein Nutzer über das Eingabemittel der Gasgrilleinrichtung eine Zieltemperatur, insbesondere eine Grilltemperatur, einstellen kann. Bevorzugt regelt eine Steuerungseinrichtung des Gasgrills und/oder der Dosiereinrichtung den Gasfluss durch die Dosiereinrichtung anhand der aktuellen Temperatur im Grill (die beispielsweise über einen Temperatursensor der Gasgrilleinrichtung messbar ist). Insbesondere regelt die Steuerungseinrichtung den Gasfluss durch die Dosiereinrichtung anhand der aktuellen Temperatur im Grill derart, dass der Gasfluss durch die Dosiereinrichtung so geregelt bzw. angepasst wird, dass die Zieltemperatur erreicht wird. Das Gas bzw. der Gasfluss wird in der Gasgrilleinrichtung insbesondere zur Erhitzung bzw. zum Grillen von Lebensmitteln verwendet.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken

### Kurze Beschreibung der Zeichnungen

- **Figur 1**: zeigt eine schematische Darstellung einer Dosiereinrichtung gemäß einem ersten Ausführungsbeispiel der vorliegenden Erfindung.
- **Figur 2**: zeigt eine schematische Darstellung einer Dosiereinrichtung gemäß einem zweiten Ausführungsbeispiel der vorliegenden Erfindung.
- **Figur 3**: zeigt eine schematische Darstellung einer Dosiereinrichtung gemäß einem dritten Ausführungsbeispiel der vorliegenden Erfindung.
- **Figur 4**: zeigt eine schematische Darstellung einer Dosiereinrichtung gemäß einem vierten Ausführungsbeispiel der vorliegenden Erfindung
- **Figur 5**: zeigt eine schematische Darstellung einer Haushaltsgeräteanordnung gemäß einem Ausführungsbeispiel der vorliegenden Erfindung.

### Ausführungsformen der Erfindung

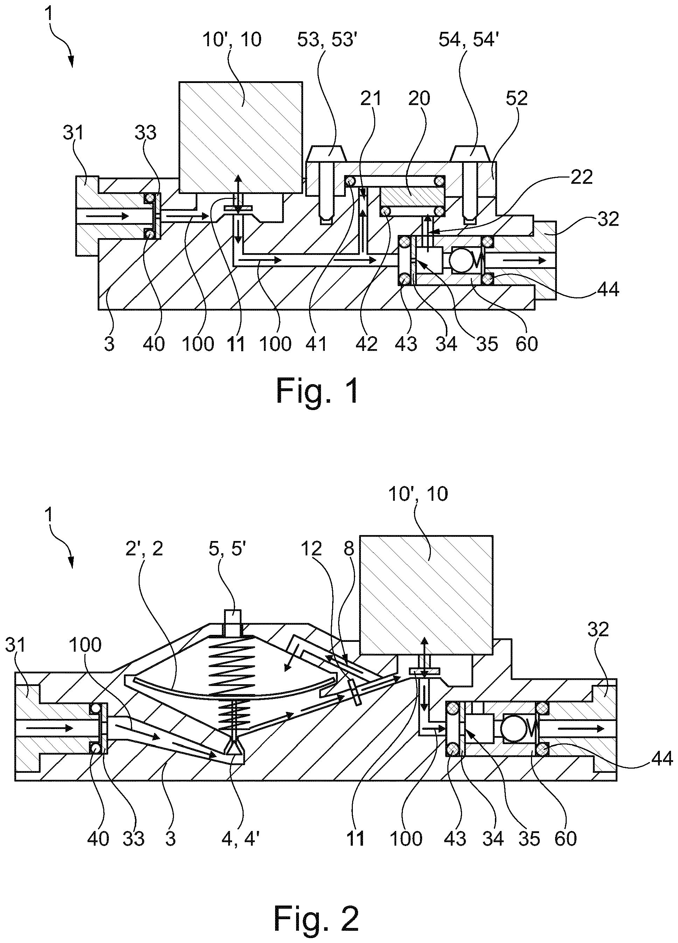

In **Figur 1** ist eine schematische Schnittansicht einer Dosiereinrichtung 1 gemäß einem ersten Ausführungsbeispiel der vorliegenden Erfindung dargestellt. Die Dosiereinrichtung 1 ist zur Einstellung und/oder Regelung eines Gasflusses 100 vorgesehen. Der Gasfluss 100 kann durch ein Gas oder ein Gasgemisch gebildet sein, wobei das verwendete Gas oder Gasgemisch für verschiedene Anwendungen der Dosiereinrichtung 1 unterschiedlich sein kann. In der Figur 1 zweigen die Pfeile 100 hierbei die Gasflussrichtung des Gases oder Gasgemischs an. Die Dosiereinrichtung 1 umfasst einen ersten Gasanschluss 31 an einer Eingangsseite der Dosiereinrichtung 1 und einen zweiten Gasanschluss 32 an einer Ausgangsseite der Dosiereinrichtung 1. Mithilfe des ersten Gasanschlusses 31 kann die Dosiereinrichtung 1 beispielsweise an eine Gaszufuhr und/oder ein Gasreservoir, wie beispielsweise eine Gaskartusche oder -flasche, angeschlossen werden, beispielsweise über eine Gasleitung. Es ist alternativ oder zusätzlich denkbar, dass die Gaszufuhr auch von einem Druckminderer via Gasleitung zum Ventil und/oder zur Dosiereinrichtung gelangen kann. Mithilfe des zweiten Gasanschlusses 32 kann die Dosiereinrichtung 1 beispielsweise an ein Haushaltsgerät angeschlossen werden, welches zur Ausführung einer Gerätefunktion des Geräts ein Gas oder Gasgemisch benötigt. Mithilfe der Dosiereinrichtung 1 kann die einem solchen Gerät bereitgestellte Gasmenge bzw. der dem Gerät an der Ausgangseite der Dosiereinrichtung bereitgestellte Gasmengenfluss dabei eingestellt und geregelt werden. Es ist optional denkbar, dass die Dosiereinrichtung 1 hinter dem ersten Gasanschluss 31 eine Eingangsblende 33 aufweist. Zur Abdichtung des Übergangs zwischen dem ersten Gasanschluss 31 und dem Gehäuse 3 der Dosiereinrichtung 1 (und vorzugsweise ebenso zur Abdichtung des Übergangs zwischen der Eingangsblende 33 und dem Gehäuse 3) ist im Bereich dieses Übergangs eine Dichtung 40 ausgebildet. Das Gehäuse 3 der Dosiereinrichtung 1 kann einteilig oder mehrteilig ausgebildet sein.

Die Dosiereinrichtung 1 umfasst ein elektrisch ansteuerbares Ventil 10', das in der dargestellten Ausführungsform als Magnetventil 10 mit einem Ventilstößel 11 ausgebildet ist. Der Gasfluss durch die Dosiereinrichtung 1 ist mithilfe des Magnetventils 10 einstellbar und/oder regelbar. Das Magnetventil 10 hat gemäß einer bevorzugten Ausführungsform entweder die Funktion eines 2/2-Wegeventils, welches mithilfe einer elektrischen Ansteuerung mit einer festen oder variablen Frequenz und einer variablen Einschaltdauer angesteuert wird, oder die Funktion eines 2/2-Wege-Proportionalventils, bei welchem über die elektrische Ansteuerung der Öffnungsquerschnitt am Ventilsitz variabel eingestellt wird. In beiden Fällen wird durch die Ansteuerung des Magnetventils 10 der Gasmengenfluss bestimmt und/oder verändert.

In Gasflussrichtung nach dem Magnetventil 10 ist eine Messblende 34 mit einer Gasdurchlassöffnung 35 angeordnet. Die Dosiereinrichtung 1 umfasst ferner einen Drucksensor 20, der zur Messung der Gasdruckdifferenz über die Messblende 34 ausgebildet ist. Ein Gaskanal 21 führt hierbei von einem in Gasflussrichtung vor der Messblende 34 ausgebildeten Bereich zu dem Drucksensor 20. Ein weiterer Gaskanal 22 führt von einem in Gasflussrichtung hinter der Messblende 34 ausgebildeten Bereich zu dem Drucksensor 20. Der Drucksensor 20 ist somit als Differenzdrucksensor ausgebildet und zur Messung der Gasdruckdifferenz beidseitig der Messblende 34 (und somit über die Gasdurchlassöffnung 35) eingerichtet. Der Gasmengenfluss durch die Dosiereinrichtung 1 ist zumindest annähernd proportional zu dem gemessenen Differenzdruck, welcher sich über die Messblende 34 einstellt. Für einen bestimmten Gasdurchlassquerschnitt der Gasdurchlassöffnung 35 in der Messblende 34 und ein bestimmtes Gas oder Gasgemisch kann mit empirischen Daten eine Verlaufskurve erstellt werden, die einen Zusammenhang zwischen der mithilfe des Drucksensors 20 ermittelten Gasdruckdifferenz und dem Gasmengenfluss betrifft und/oder angibt. Beispielsweise kann die Verlaufskurve ein Verhältnis von der Gasdruckdifferenz zu dem Gasmengenfluss angeben. Wenn diese Verlaufskurve einmal ermittelt wurde, kann das Magnetventil 10 so gesteuert und/oder geregelt werden, dass die mittlere Gasdruckdifferenz über die Messblende 34, die mithilfe des Drucksensors 20 im Betrieb der Dosiereinrichtung ermittelbar und/oder überwachbar ist, dem gewünschten Gasmengenfluss entspricht. Hierdurch kann eine vorteilhafte und präzise Einstellung und Regelung des Gasflusses erfolgen, ohne dass eine mechanische Interkation durch einen Nutzer, wie beispielsweise ein Verstellen einer Schraube oder eines Ventils, nötig ist.

Der Drucksensor 20 ist an seiner Oberseite mithilfe einer Abdeckung 52 abgedeckt. Mithilfe der Abdeckung 52 ist ferner ein Teil des Gaskanals 21 ausgebildet. Die Abdeckung 52 ist optional über Verbindungsmittel 53, 54, insbesondere über Schraubverbindungen 53`, 54`, an dem Gehäuse 3 befestigt, vorzugsweise reversibel. Es ist denkbar, dass durch ein Entfernen der Abdeckung 52 der Drucksensor 20 freigelegt werden kann, insbesondere außerhalb des Betriebs der Dosiereinrichtung 1. Zur Abdichtung des Übergangs zwischen der Abdeckung 52 und dem Gehäuse 3 ist eine Dichtung 41 im Bereich dieses Übergangs angeordnet. Die Dichtung 41 befindet sich dabei insbesondere auch teilweise an der Oberseite des Drucksensors 20. An die Unterseite des Drucksensors 20, insbesondere an einem Übergang zwischen dem Drucksensor 20 und den Gehäuse 3, ist eine weitere Dichtung 42 zur Abdichtung dieses Übergangs angeordnet. Eine zusätzliche Dichtung 43 befindet sich am Übergang zwischen dem Gehäuse 3 und der Messblende 34 zur Abdichtung des Übergangs zwischen der Messblende 34 und dem Gehäuse 3.

Des Weiteren umfasst die Dosiereinrichtung 1 optional ein Rückschlagventil 60, welches in Gasflussrichtung vor dem zweiten Gasanschluss 32, also vor dem Ausgang der Dosiereinrichtung 1, und hinter der Messblende 34 angeordnet ist. Das Rückschlagventil 60 schränkt den Gasfluss in vorteilhafter Weise auf die vorgesehene Richtung vom Eingang zum Ausgang, also vom ersten Gasanschluss 31 zum zweiten Gasanschluss 32 ein, und unterdrückt einen ungewünschten entgegengesetzten Gasfluss. Am Übergang zwischen dem Rückschlagventil 60, dem zweiten Gasanschluss 32 und dem Gehäuse 3 ist eine Dichtung 44 zur Abdichtung dieses Übergangs angeordnet.

In **Figur 2** ist eine schematische Schnittansicht einer Dosiereinrichtung 1 gemäß einem zweiten Ausführungsbeispiel der vorliegenden Erfindung dargestellt. Die Dosiereinrichtung 1 ist zur Einstellung und/oder Regelung eines Gasflusses 100 vorgesehen. Der Gasfluss 100 kann durch ein Gas oder ein Gasgemisch gebildet sein, wobei das verwendete Gas oder Gasgemisch für verschiedene Anwendungen der Dosiereinrichtung 1 unterschiedlich sein kann. Die Pfeile 100 symbolisieren die Gasflussrichtung des Gases oder Gasgemischs. Die Dosiereinrichtung 1 umfasst einen ersten Gasanschluss 31 an einer Eingangsseite der Dosiereinrichtung 1 und einen zweiten Gasanschluss 32 an einer Ausgangsseite der Dosiereinrichtung 1. Mithilfe des ersten Gasanschlusses 31 kann die Dosiereinrichtung 1 beispielsweise an einen Gaszufuhr und/oder ein Gasreservoir, wie beispielsweise eine Gaskartusche oder -flasche, angeschlossen werden, beispielsweise über eine Gasleitung. Mithilfe des zweiten Gasanschlusses 32 kann die Dosiereinrichtung 1 beispielsweise an ein Haushaltsgerät angeschlossen werden, welches zur Ausführung einer Gerätefunktion des Geräts ein Gas oder Gasgemisch benötigt. Mithilfe der Dosiereinrichtung 1 kann die einem solchen Gerät bereitgestellte Gasmenge bzw. der dem Gerät an der Ausgangseite der Dosiereinrichtung 1 bereitgestellte Gasmengenfluss dabei eingestellt und geregelt werden. Optional umfasst die Dosiereinrichtung 1 hinter dem ersten Gasanschluss 31 eine Eingangsblende 33. Zur Abdichtung des Übergangs zwischen dem ersten Gasanschluss 31, dem Gehäuse 3 der Dosiereinrichtung 1 und der Eingangsblende 33 ist eine Dichtung 40 im Bereich dieses Übergangs ausgebildet. Das Gehäuse 3 der Dosiereinrichtung 1 kann einteilig oder mehrteilig ausgebildet sein. Die Dosiereinrichtung 1 weist eine verstellbare Druckregelungseinrichtung 2' auf. Die Druckregelungseinrichtung 2' ist vorzugsweise als Kolbendruckregler und/oder Membrandruckregler (bzw. mithilfe eines Kolbendruckminderers und/oder eines Membrandruckminderers) ausgebildet. In der gezeigten Ausführungsform weist die Druckregelungseinrichtung 2' eine verstellbare Membran 2 auf. Die Räume auf beiden Seiten der Membran 2 sind über eine Blende 12, insbesondere eine Differenzdruckblende, und mithilfe eines Verbindungskanals 8 miteinander verbunden. Die Membran 2 ist mit einem Ventil 4, insbesondere einem Kegelventil 4`, verbunden, wobei das Ventil 4 durch die Membran 2, insbesondere in Abhängigkeit einer Durchbiegung und/oder Auslenkung der Membran 2, einstellbar ist. Zur Einstellung der Membran 2 ist ein Justiermittel 5, insbesondere eine Justierschraube 5`, an der Dosiereinrichtung 1 vorgesehen. Insbesondere sind die Membran 2 und das Justiermittel 5 mithilfe einer Federeinrichtung verbunden. Über das Justiermittel 5 kann der Druck auf die Membran 2 eingestellt werden und somit insbesondere auch der Durchlassquerschnitt des Ventils 4. Die Blende 12 ist so eingebaut, dass bei einem Gasfluss ein Differenzdruck über die Membran 2 entsteht, so dass sich das Ventil 4 einstellt. Über die verstellbare Membran 2 und das Ventil 4 kann somit eine maximale Gasdruckdifferenz zwischen einem Eingangsbereich der Dosiereinrichtung 1 und einem Ausgangsbereich der Dosiereinrichtung 1 eingestellt und insbesondere festgelegt werden. Mithilfe der Membran 2 kann somit der Gasfluss durch die Dosiereinrichtung 1 auf einen maximalen Wert begrenzt werden. In Gasflussrichtung nach der Membran 2 ist ein elektrisch ansteuerbares Ventil 10' ausgebildet, das ein Magnetventil 10 mit einem Ventilstößel 11 umfasst.

Der Gasfluss durch die Dosiereinrichtung 1 ist mithilfe des Magnetventils 10 einstellbar und/oder regelbar, wobei der mithilfe des Magnetventils 10 einstellbare Gasfluss durch den mithilfe der Membran 2 eingestellten maximalen Wert begrenzt ist. Hierfür wird vorzugsweise auf oder mithilfe einer Prüf- und/oder Kalibriervorrichtung die Membran 2 über das Justiermittel 5 so eingestellt und fixiert, dass bei vollständig geöffnetem Magnetventil 10 ein bestimmter Differenzdruck zwischen der Eingangsseite und Ausgangsseite vorliegt. Das Magnetventil 10 hat gemäß einer bevorzugten Ausführungsform entweder die Funktion eines 2/2-Wegeventils, welches mithilfe einer elektrischen Ansteuerung mit einer festen oder variablen Frequenz und einer variablen Einschaltdauer angesteuert wird, oder die Funktion eines 2/2-Wege-Proportionalventils, bei welchem über die elektrische Ansteuerung der Öffnungsquerschnitt am Ventilsitz variabel eingestellt wird. In beiden Fällen wird durch die Ansteuerung des Magnetventils 10 der Gasmengenfluss durch die Dosiereinrichtung 1 bestimmt und/oder verändert. Der Gasmengenfluss ist dabei zumindest annähernd proportional zu dem Tastverhältnis des 2/2-Wegeventils bzw. zu dem Öffnungsquerschnitt des 2/2-Wege-Proportionalventils. Für einen bestimmten Gasdurchlassquerschnitt beim Ventilsitz des Magnetventils 10 (oder bei einer Blende) und ein bestimmtes Gas oder Gasgemisch wird bevorzugt mit empirischen Daten, besonders bevorzugt mithilfe von Messungen, eine Verlaufskurve erstellt, die
(i) - im Falle eines 2/2-Wegeventils - einen Zusammenhang zwischen dem Tastverhältnis und dem Gasmengenfluss angibt bzw.
(ii) - im Falle eines 2/2-Wege-Proportionalventils - einen Zusammenhang zwischen dem Öffnungsquerschnitt und dem Gasmengenfluss angibt.

Besonders bevorzugt gibt die Verlaufskurve
(i) - im Falle eines 2/2-Wegeventils - das Verhältnis zwischen dem Tastverhältnis und dem Gasmengenfluss an bzw.
(ii) - im Falle eines 2/2-Wege-Proportionalventils - das Verhältnis zwischen dem Öffnungsquerschnitt und dem Gasmengenfluss.

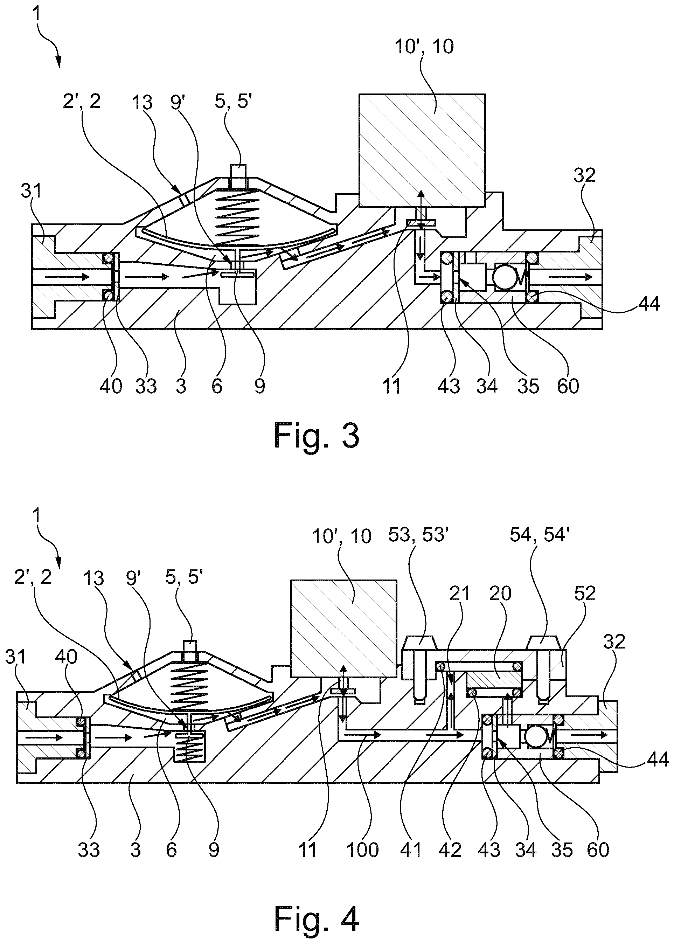

In **Figur 3** ist eine schematische Schnittansicht einer Dosiereinrichtung 1 gemäß einem dritten Ausführungsbeispiel der vorliegenden Erfindung dargestellt. Wie auch beim zweiten Ausführungsbeispiel gemäß der Figur 2 ist beim dritten Ausführungsbeispiel eine verstellbare Membran 2 vorhanden, mit deren Hilfe eine maximale Gasdruckdifferenz zwischen dem Eingangsbereich der Dosiereinrichtung 1 und dem Ausgangsbereich der Dosiereinrichtung 1 einstellbar ist, sodass der maximale Gasfluss durch die Dosiereinrichtung 1 begrenzt ist. Im Unterschied zu dem in der Figur 2 gezeigten zweiten Ausführungsbeispiel ist bei dem dritten Ausführungsbeispiel kein Kegelventil 4' vorhanden. Die Dosiereinrichtung 1 gemäß dem dritten Ausführungsbeispiel umfasst eine Zwischenkammer 6, die insbesondere angrenzend an die Membran 2 ausgebildet ist. Wie auch bei dem zweiten Ausführungsbeispiel ist zur Einstellung der Membran 2 ein Justiermittel 5, insbesondere eine Justierschraube 5`, an der Dosiereinrichtung 1 ausgebildet. Über das Justiermittel 5 kann der Druck auf die Membran 2 eingestellt werden. Die Kammer der Membran 2 weist auf der der Zwischenkammer 6 abgewandten Seite der Membran 2 einen Durchgang 13 zur Umgebung bzw. Atmosphäre hin auf. Auf der von der Zwischenkammer 6 abgewandten Seite der Membran 2 wirken somit der Luftdruck und der mithilfe des Justiermittels einstellbare Druck auf die Membran 2. Die Membran 2 ist mit einem Ventilelement 9 verbunden, das somit über die Membran 2 einstellbar ist. Die Membran 2 und das Ventilelement 9 sind an gegenüberliegenden Seiten eines Durchlasses 9' angeordnet. Über die Membran wir das Ventilelement 9 so eingestellt, dass eine maximale Gasdruckdifferenz zwischen einem Eingangsbereich der Dosiereinrichtung 1 und einem Ausgangsbereich der Dosiereinrichtung 1 eingestellt und insbesondere festgelegt werden kann. Die Membran 2 und das Ventilelement 9 regeln somit insbesondere einen Überdruck zur Atmosphäre bzw. Umgebung. Mithilfe der Membran 2 kann somit der Gasfluss durch die Dosiereinrichtung 1 auf einen maximalen Wert begrenzt werden. Der Gasfluss durch die Dosiereinrichtung 1 ist mithilfe des Magnetventils 10 einstellbar und/oder regelbar, wobei der mithilfe des Magnetventils 10 einstellbare Gasfluss durch die Einstellung der Membran 2 begrenzbar ist. Entsprechend dem zweiten Ausführungsbeispiel wird hierfür vorzugsweise auf oder mithilfe einer Prüf- und/oder Kalibriervorrichtung die Membran 2 über das Justiermittel 5 so eingestellt und fixiert, dass bei vollständig geöffnetem Magnetventil 10 ein bestimmter Differenzdruck zwischen der Eingangsseite und Ausgangsseite vorliegt. Das Magnetventil 10 weist vorzugsweise entweder die Funktion eines 2/2-Wegeventils, welches mithilfe einer elektrischen Ansteuerung mit einer festen oder variablen Frequenz und einer variablen Einschaltdauer angesteuert wird, oder die Funktion eines 2/2-Wege-Proportionalventils, bei welchem über die elektrische Ansteuerung der Öffnungsquerschnitt am Ventilsitz variabel eingestellt wird, auf. In beiden Fällen wird durch die Ansteuerung des Magnetventils 10 der Gasmengenfluss durch die Dosiereinrichtung 1 bestimmt und/oder verändert.

Im Unterschied zu dem in der Figur 1 dargestellten ersten Ausführungsbeispiel weist die Dosiereinrichtung 1 gemäß dem zweiten und dritten Ausführungsbeispiel keinen Drucksensor 20 auf.

Es ist jedoch gemäß weiterer Ausführungsformen der vorliegenden Erfindung denkbar, eine Dosiereinrichtung 1 sowohl mit einer Membran 2 (beispielsweise gemäß den Figuren 2 und 3) als auch einem Drucksensor 20 (beispielsweise gemäß der Figur 1) auszubilden.

Gemäß dem ersten Ausführungsbeispiel (vgl. Figur 1) ist es möglich, dass der messbare Differenzdruck bzw. die Gasdruckdifferenz über die Gasdurchlassöffnung 35, die mithilfe des Drucksensors 20 ermittelbar ist, in vorteilhafter Weise genutzt wird, um die Gasflussmenge zu quantifizieren, insbesondere auf Basis von empirisch ermittelten Daten des gesamten Einstellbereichs des Magnetventils 10 und/oder der Magnetventil-Ansteuerung sowie toleranzbedingter Performance-Abweichungen.

Gemäß dem zweiten und dritten Ausführungsbeispiel (vgl. Figuren 2 und 3) ist es möglich, dass eine konstante oder annähernd konstante maximale Gasdruckdifferenz bei der Dosiereinrichtung 1 mithilfe der Membran 2 ausgebildet wird. Dieser konstante Differenzdruck wird in vorteilhafter Weise genutzt, um die Gasflussmenge zu quantifizieren, insbesondere auf Basis von empirisch ermittelten Daten des gesamten Einstellbereichs des Magnetventils 10 und/oder der Magnetventil-Ansteuerung sowie toleranzbedingter Performance-Abweichungen. Die empirisch ermittelten Daten sind insbesondere Referenzdaten, die beispielsweise in einer Vorlaufphase für die Dosiereinrichtung 1 und/oder mithilfe weiterer Dosiereinrichtungen und/oder mithilfe von Simulationen ermittelt werden.

In **Figur 4** ist eine schematische Schnittansicht einer Dosiereinrichtung 1 gemäß einem vierten Ausführungsbeispiel der vorliegenden Erfindung dargestellt. Das vierte Ausführungsbeispiel entspricht dabei dem dritten Ausführungsbeispiel gemäß der Figur 3, wobei zusätzlich eine Differenzdruckregelung mithilfe eines Drucksensors 20 ausgebildet ist. Der Drucksensor 20 bzw. die Differenzdruckregelung kann beispielsweise gemäß dem ersten Ausführungsbeispiel der Figur 1 ausgebildet sein.

Mithilfe einer erfindungsgemäßen Dosiereinrichtung 1, beispielsweise gemäß einem der vorhergehenden Ausführungsbeispiele, kann insbesondere ein vergleichsweise kleiner Gasmengenfluss im Bereich von 0 bis 100 g/min, insbesondere im Bereich von 0 bis 10 g/min, durch eine elektrische Ansteuerung des elektrisch ansteuerbaren Ventils 10', insbesondere des Magnetventils 10, stufenlos oder mit einer oder mehreren Abstufungen exakt eingestellt werden. Besonders vorteilhaft ist es möglich, dass der Differenzdruck zwischen dem Gasanschluss auf der Eingangsseite und dem Gasanschluss auf der Ausgangsseite durch die geometrischen Eigenschaften der Dosiereinrichtung 1 (insbesondere mithilfe der Membran 2) auf einen bestimmten Maximalwert, vorzugsweise zwischen 0,01 bar und 2,00 bar, beschränkt wird, insbesondere abhängig davon, welcher maximale Gasmengenfluss für eine bestimmte Anwendung gewünscht ist. Mithilfe einer erfindungsgemäßen Dosiereinrichtung 1 kann der Vorteil erzielt werden, dass der Gasmengenfluss auch dann exakt gesteuert werden kann, wenn der absolute Gasdruck auf der Eingangs- und/oder der Ausgangsseite nicht immer auf dem gleichen Level ist bzw. nicht konstant ist. Das bedeutet insbesondere, dass keine oder zumindest keine starke Abhängigkeit von der vorhandenen absoluten Druckdifferenz besteht. In diesem Fall, ist es bevorzugt, dass für die einwandfreie Funktion der Dosiereinrichtung 1 sichergestellt ist, dass der absolute Druck am Eingang mindestens um die bestimmte, maximale Gasdruckdifferenz (vorzugsweise zwischen 0,01 und 2,00 bar) höher ist als der absolute Druck auf der Ausgangsseite.

Erfindungsgemäß kann somit ein kompaktes und kostengünstiges Gasdosiersystem bereitgestellt werden, mit welchem ein vergleichsweise kleiner Gasmengenfluss, insbesondere im Bereich von 0 bis 100 g/min, ohne mechanische Betätigung variabel eingestellt werden kann. Hierdurch ist eine erfindungsgemäße Dosiereinrichtung 1 besonders vorteilhaft für den Einsatz in Haushaltsgeräten 7 geeignet.

Bevorzugt kann durch die elektrische Ansteuerung der Dosiereinrichtung 1, insbesondere des Magnetventils 10, der Gasmengenfluss innerhalb eines bestimmten Einstellbereichs vorgegeben und quantifiziert werden, ohne dass eine direkte Mengenmessung dazu nötig ist.

Der maximale Differenzdruck und der maximale Gasmengenfluss können auf bestimmte Werte begrenzt werden, insbesondere durch die Abstimmung der geometrischen und mechanischen Eigenschaften der Dosiereinrichtung und insbesondere mithilfe der Membran 2.

Besonders vorteilhaft muss erfindungsgemäß für eine Veränderung des Gasmengenflusses keine mechanische Verstellung eines Ventils durch einen Nutzer vorgenommen werden.

In vorteilhafter Weise haben Druckschwankungen am Eingang und/oder Ausgang der Dosiereinrichtung keinen oder allenfalls einen geringen Einfluss auf den Gasmengenfluss, da solche Schwankungen vollständig oder zumindest teilweise kompensiert werden können.

Es ist ein besonderer Vorteil der vorliegenden Erfindung, dass eine einzelne Dosiereinrichtung 1 für verschiedene Gasmedien verwendet werden kann. Die Flussmenge lässt sich dabei je nach Gas unterscheiden, sofern die entsprechenden Kennlinien in der Software der Steuerelektronik abgebildet und berücksichtigt werden.

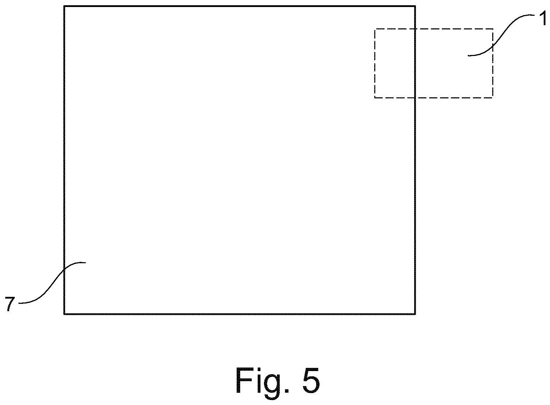

In **Figur 5** ist eine schematische Darstellung einer Haushaltsgeräteanordnung gemäß einem Ausführungsbeispiel der vorliegenden Erfindung gezeigt. Die Haushaltsgeräteanordnung umfasst ein Haushaltsgerät 7 und eine Dosiereinrichtung 1 gemäß einer Ausführungsform der vorliegenden Erfindung.

Bei dem Haushaltsgerät 7 kann es sich beispielsweise um einen Wasserspender oder eine Kaltgetränkemaschine handeln, wobei die Dosiereinrichtung 1 zur Dosierung eines CO₂-Flusses verwendet wird. Ein Nutzer kann über ein Interface der Haushaltsgeräteanordnung ein Getränk mit einem bestimmten CO2-Gehalt auswählen, wobei die gewünschte CO2-Menge während dem Getränkebezug dem Wasser oder Kaltgetränk über die Dosiereinrichtung 1 direkt und insbesondere in-line hinzugefügt wird.

Alternativ kann es sich bei dem Haushaltsgerät 7 beispielsweise um einen Gasgrill mit einer Temperaturregelung handeln. Ein Nutzer kann über ein Interface der Haushaltsgeräteanordnung, insbesondere des Gasgrills, eine Grilltemperatur einstellen. Eine Steuerung bzw. Ansteuerung regelt den Gasmengenfluss über die Dosiereinrichtung 1 anhand der aktuellen Temperatur im Grill.

Alternativ sind auch andere Typen und Arten von Haushaltsgeräten 7 denkbar, die gemeinsam mit einer Dosiereinrichtung 1 gemäß einer Ausführungsform der vorliegenden Erfindung verwendet werden können.

### Bezugszeichenliste

- 1: Dosiereinrichtung
- 2: Membran
- 2': Druckregelungseinrichtung
- 3: Gehäuse
- 4: Ventil
- 4`: Kegelventil
- 5: Justiermittel
- 5': Justierschraube
- 6: Zwischenkammer
- 7: Haushaltsgerät
- 8: Verbindungskanal
- 9: Ventilelement
- 9': Durchlass
- 10: Magnetventil
- 10': elektrisch ansteuerbares Ventil
- 11: Ventilstößel
- 12: Blende
- 13: Durchgang
- 20: Drucksensor
- 21: Gaskanal
- 22: weiterer Gaskanal
- 31: erster Gasanschluss
- 32: zweiter Gasanschluss
- 33: Eingangsblende
- 34: Messblende
- 35: Gasdurchlassöffnung
- 40: Dichtung
- 41: Dichtung
- 42: Dichtung
- 43: Dichtung
- 44: Dichtung
- 45: Dichtung
- 52: Abdeckung
- 53: Verbindungsmittel
- 53': Schraubverbindung
- 54: Verbindungsmittel
- 54': Schraubverbindung
- 60: Rückschlagventil
- 100: Gasfluss

## Patentansprüche

1. Haushaltsgeräteanordnung, umfassend ein Haushaltsgerät (7) und eine Dosiereinrichtung (1) zur Einstellung und/oder Regelung eines Gasflusses (100), wobei mithilfe der Dosiereinrichtung (1) ein Gasmengenfluss im Bereich von 0 bis 10 g/min einstellbar ist, wobei die Dosiereinrichtung (1) ein elektrisch ansteuerbares Ventil (10') umfasst, wobei der Gasfluss (100) durch die Dosiereinrichtung (1) mithilfe des elektrisch ansteuerbaren Ventils (10`) einstellbar und/oder regelbar ist, wobei die Dosiereinrichtung (1) einen Drucksensor (20) aufweist, und wobei die Dosiereinrichtung (1) eine verstellbare Druckregelungseinrichtung (2') umfasst, **dadurch gekennzeichnet, dass** mithilfe des Drucksensors (20) eine Gasdruckdifferenz über eine Gasdurchlassöffnung (35) der Dosiereinrichtung (1) messbar ist, wobei das elektrisch ansteuerbare Ventil (10`) in Abhängigkeit der gemessenen Gasdruckdifferenz einstellbar ist; wobei mithilfe der verstellbaren Druckregelungseinrichtung (2') eine maximale Gasdruckdifferenz zwischen einem Eingangsbereich der Dosiereinrichtung (1) und einem Ausgangsbereich der Dosiereinrichtung (1) einstellbar ist, wobei der mithilfe des elektrisch ansteuerbaren Ventils (10') einstellbare Gasfluss (100) durch die Dosiereinrichtung (1) durch die mithilfe der verstellbaren Druckregelungseinrichtung (2') eingestellte maximale Gasdruckdifferenz zwischen dem Eingangsbereich der Dosiereinrichtung (1) und dem Ausgangsbereich der Dosiereinrichtung (1) begrenzt ist, wobei die mithilfe der verstellbaren Druckregelungseinrichtung (2') einstellbare maximale Gasdruckdifferenz zwischen dem Eingangsbereich der Dosiereinrichtung (1) und dem Ausgangsbereich der Dosiereinrichtung (1) einem festlegbaren Maximalwert zwischen einschließlich 0,01 bar und einschließlich 2,00 bar entspricht.

2. Haushaltsgeräteanordnung nach Anspruch 1, wobei die verstellbare Druckregelungseinrichtung (2') mithilfe einer verstellbaren Membran (2) und/oder mithilfe eines verstellbaren Kolbens ausgebildet ist.

3. Haushaltsgeräteanordnung nach einem der vorhergehenden Ansprüche, wobei die verstellbare Druckregelungseinrichtung, insbesondere die verstellbare Membran (2) und/oder der verstellbare Kolben, mithilfe eines Justiermittels (5) mechanisch verstellbar ist, insbesondere derart, dass die maximale Gasdruckdifferenz zwischen dem Eingangsbereich der Dosiereinrichtung (1) und dem Ausgangsbereich der Dosiereinrichtung (1) über das Justiermittel (5) einstellbar ist.

4. Haushaltsgeräteanordnung nach einem der vorhergehenden Ansprüche, wobei das elektrisch ansteuerbare Ventil, insbesondere in Abhängigkeit der gemessenen Gasdruckdifferenz, derart einstellbar ist, dass ein Zielwert für die Gasdruckdifferenz über die Gasdurchlassöffnung (35) und/oder ein Zielwert für den Gasfluss (100) durch die Dosiereinrichtung (1), insbesondere durch die Gasdurchlassöffnung (35), einstellbar ist.

5. Haushaltsgeräteanordnung nach einem der vorhergehenden Ansprüche, wobei der Gasfluss (100) durch die Dosiereinrichtung (1) mithilfe von Referenzdaten ermittelbar und/oder einstellbar ist, wobei die Referenzdaten insbesondere einen Zusammenhang zwischen der Gasdruckdifferenz über die Gasdurchlassöffnung (35) und dem Gasfluss (100) durch die Dosiereinrichtung (1) betreffen.

6. Haushaltsgeräteanordnung nach einem der vorhergehenden Ansprüche, wobei das elektrisch ansteuerbare Ventil (10`) ein Magnetventil (10) umfasst oder ist.

7. Haushaltsgeräteanordnung nach einem der vorhergehenden Ansprüche, wobei das elektrisch ansteuerbare Ventil (10'), insbesondere das Magnetventil (10), mithilfe einer Steuerungseinrichtung ansteuerbar ist.

8. Haushaltsgeräteanordnung nach Anspruch 7, wobei das Magnetventil (10) ein 2/2-Wegeventil aufweist, welches mithilfe der Steuerungseinrichtung mit einer, insbesondere festen oder variablen, Frequenz und einer variablen Einschaltdauer, ansteuerbar ist, insbesondere derart, dass der Gasfluss (100) durch die Dosiereinrichtung (1) mithilfe einer Wahl der Einschaltdauer einstellbar ist, oder wobei das Magnetventil (10) ein 2/2-Wege-Proportionalventil aufweist, bei welchem über eine Ansteuerung mithilfe der Steuerungseinrichtung ein variabler Öffnungsquerschnitt am Ventilsitz des Magnetventils (10) einstellbar ist, insbesondere derart, dass der Gasfluss (100) durch die Dosiereinrichtung (1) mithilfe einer Wahl des Öffnungsquerschnitts am Ventilsitz einstellbar ist.

9. Haushaltsgeräteanordnung nach einem der vorhergehenden Ansprüche, wobei die einstellbare maximale Gasdruckdifferenz in Abhängigkeit eines wählbaren maximalen Gasflusses (100) bestimmt ist.

10. Haushaltsgeräteanordnung nach einem der vorhergehenden Ansprüche, wobei die Dosiereinrichtung (1) ein Rückschlagventil (60) umfasst.

11. Haushaltsgeräteanordnung nach einem der vorhergehenden Ansprüche, wobei das Haushaltsgerät (7) eine Getränkezubereitungsmaschine ist, wobei ein Getränk und/oder eine Vorsubstanz zur Zubereitung eines Getränks mithilfe der Dosiereinrichtung (1) mit einem Gas oder Gasgemisch, insbesondere mit CO₂, versetzbar ist, wobei der Gasfluss (100) des Gases oder Gasgemischs mithilfe der Dosiereinrichtung (1) einstellbar ist.

12. Haushaltsgeräteanordnung nach einem der vorhergehenden Ansprüche, wobei das Haushaltsgerät (7) eine Gasgrilleinrichtung ist, wobei mithilfe der Dosiereinrichtung (1) ein Gasfluss (100) der Gasgrilleinrichtung einstellbar ist.

13. Verfahren zur Einstellung und/oder Regelung eines Gasflusses (100) mithilfe einer Dosiereinrichtung (1) einer Haushaltsgeräteanordnung nach einem der vorhergehenden Ansprüche, wobei mithilfe der Dosiereinrichtung (1) ein Gasmengenfluss im Bereich von 0 bis 10 g/min einstellbar ist, wobei die Dosiereinrichtung (1) einen Drucksensor (20) aufweist, wobei mithilfe des Drucksensors (20) eine Gasdruckdifferenz über eine Gasdurchlassöffnung (35) der Dosiereinrichtung (1) gemessen wird, wobei das elektrisch ansteuerbare Ventil (10') in Abhängigkeit der gemessenen Gasdruckdifferenz eingestellt wird; und wobei die Dosiereinrichtung (1) eine verstellbare Druckregelungseinrichtung (2') umfasst, wobei mithilfe der verstellbaren Druckregelungseinrichtung (2') eine maximale Gasdruckdifferenz zwischen einem Eingangsbereich der Dosiereinrichtung (1) und einem Ausgangsbereich der Dosiereinrichtung (1) eingestellt wird, wobei der mithilfe des elektrisch ansteuerbaren Ventils (10`) einstellbare Gasfluss (100) durch die Dosiereinrichtung (1) durch die mithilfe der verstellbaren Druckregelungseinrichtung (2') eingestellte maximale Gasdruckdifferenz zwischen dem Eingangsbereich der Dosiereinrichtung (1) und dem Ausgangsbereich der Dosiereinrichtung (1) begrenzt ist, wobei die mithilfe der verstellbaren Druckregelungseinrichtung (2') einstellbare maximale Gasdruckdifferenz zwischen dem Eingangsbereich der Dosiereinrichtung (1) und dem Ausgangsbereich der Dosiereinrichtung (1) einem festlegbaren Maximalwert zwischen einschließlich 0,01 bar und einschließlich 2,00 bar entspricht.

14. Verfahren nach Anspruch 13, wobei der Gasfluss (100) durch ein Gas oder ein Gasgemisch gebildet ist, wobei für einen gegebenen Gasdurchlassquerschnitt der Gasdurchlassöffnung (35) und für das Gas oder das Gasgemisch Referenzdaten, insbesondere eine Verlaufskurve des Gasflusses (100) in Abhängigkeit der gemessenen Gasdruckdifferenz über die Gasdurchlassöffnung (35), ermittelt werden, wobei das elektrisch ansteuerbare Ventil (10') in Abhängigkeit der Referenzdaten derart angesteuert und/oder eingestellt wird, dass die sich einstellende Gasdruckdifferenz über die Gasdurchlassöffnung (35) einem wählbaren Gasfluss entspricht.

15. Verfahren nach einem der Ansprüche 13 oder 14, wobei die verstellbare Druckregelungseinrichtung (2'), insbesondere mithilfe einer Prüf- und/oder Kalibriervorrichtung und insbesondere mithilfe des Justiermittels (5), derart eingestellt, und insbesondere fixiert, wird, dass bei einer vollständig geöffneten Stellung des elektrisch ansteuerbaren Ventils (10') die einstellbare maximale Gasdruckdifferenz zwischen dem Eingangsbereich und dem Ausgangsbereich vorliegt.

## Claims

1. Domestic appliance assembly, comprising a domestic appliance (7) and a metering device (1) for adjusting and/or controlling a gas flow (100), wherein a mass flow of gas in the range of from 0 to 10 g/min can be adjusted by means of the metering device (1), wherein the metering device (1) comprises an electrically activatable valve (10'), wherein the gas flow (100) through the metering device (1) can be adjusted and/or controlled by means of the electrically activatable valve (10'), wherein the metering device (1) has a pressure sensor (20), and wherein the metering device (1) comprises an adjustable pressure control device (2'),
**characterized in that** a gas pressure difference across a gas passage opening (35) of the metering device (1) can be measured by means of the pressure sensor (20), wherein the electrically activatable valve (10') can be adjusted in dependence on the measured gas pressure difference;
wherein a maximum gas pressure difference between an inlet region of the metering device (1) and an outlet region of the metering device (1) can be adjusted by means of the adjustable pressure control device (2'), wherein the gas flow (100) through the metering device (1), which can be adjusted by means of the electrically activatable valve (10'), is limited by the maximum gas pressure difference between the inlet region of the metering device (1) and the outlet region of the metering device (1) that is adjusted by means of the adjustable pressure control device (2'), wherein the maximum gas pressure difference between the inlet region of the metering device (1) and the outlet region of the metering device (1) that can be adjusted by means of the adjustable pressure control device (2') corresponds to a specifiable maximum value between 0.01 bar inclusive and 2.00 bar inclusive.

2. Domestic appliance assembly according to Claim 1, wherein the adjustable pressure control device (2') is formed by means of an adjustable membrane (2) and/or by means of an adjustable piston.

3. Domestic appliance assembly according to one of the preceding claims, wherein the adjustable pressure control device, in particular the adjustable membrane (2) and/or the adjustable piston, is mechanically adjustable by means of an adjusting means (5), in particular in such a manner that the maximum gas pressure difference between the inlet region of the metering device (1) and the outlet region of the metering device (1) can be adjusted by means of the adjusting means (5).

4. Domestic appliance assembly according to one of the preceding claims, wherein the electrically activatable valve can be adjusted, in particular in dependence on the measured gas pressure difference, in such a manner that a target value for the gas pressure difference across the gas passage opening (35) and/or a target value for the gas flow (100) through the metering device (1), in particular through the gas passage opening (35), can be adjusted.

5. Domestic appliance assembly according to one of the preceding claims, wherein the gas flow (100) through the metering device (1) can be determined and/or adjusted by means of reference data, wherein the reference data relate in particular to a relationship between the gas pressure difference across the gas passage opening (35) and the gas flow (100) through the metering device (1).

6. Domestic appliance assembly according to one of the preceding claims, wherein the electrically activatable valve (10') comprises or is a solenoid valve (10).

7. Domestic appliance assembly according to one of the preceding claims, wherein the electrically activatable valve (10'), in particular the solenoid valve (10), can be activated by means of a control device.

8. Domestic appliance assembly according to Claim 7, wherein the solenoid valve (10) has a 2/2-way valve which can be activated by means of the control device with a frequency, in particular a fixed or variable frequency, and with a variable on-time, in particular in such a manner that the gas flow (100) through the metering device (1) can be adjusted by selecting the on-time, or wherein the solenoid valve (10) has a 2/2-way proportional valve, in which a variable opening cross section at the valve seat of the solenoid valve (10) can be adjusted by activation by means of the control device, in particular in such a manner that the gas flow (100) through the metering device (1) can be adjusted by selecting the opening cross section at the valve seat.

9. Domestic appliance assembly according to one of the preceding claims, wherein the maximum gas pressure difference which can be adjusted is determined in dependence on a selectable maximum gas flow (100).

10. Domestic appliance assembly according to one of the preceding claims, wherein the metering device (1) comprises a non-return valve (60).

11. Domestic appliance assembly according to one of the preceding claims, wherein the domestic appliance (7) is a drinks making machine, wherein a gas or gas mixture, in particular CO₂, can be added by means of the metering device (1) to a drink and/or a preliminary substance for making a drink, wherein the gas flow (100) of the gas or gas mixture can be adjusted by means of the metering device (1).

12. Domestic appliance assembly according to one of the preceding claims, wherein the domestic appliance (7) is a gas grill, wherein a gas flow (100) of the gas grill can be adjusted by means of the metering device (1).

13. Method for adjusting and/or controlling a gas flow (100) by means of a metering device (1) of a domestic appliance assembly according to one of the preceding claims, wherein a mass flow of gas in the range of from 0 to 10 g/min can be adjusted by means of the metering device (1), wherein the metering device (1) has a pressure sensor (20), wherein a gas pressure difference across a gas passage opening (35) of the metering device (1) is measured by means of the pressure sensor (20), wherein the electrically activatable valve (10') is adjusted in dependence on the measured gas pressure difference; and wherein the metering device (1) comprises an adjustable pressure control device (2'), wherein a maximum gas pressure difference between an inlet region of the metering device (1) and an outlet region of the metering device (1) is adjusted by means of the adjustable pressure control device (2'), wherein the gas flow (100) through the metering device (1), which can be adjusted by means of the electrically activatable valve (10'), is limited by the maximum gas pressure difference between the inlet region of the metering device (1) and the outlet region of the metering device (1) that is adjusted by means of the adjustable pressure control device (2'), wherein the maximum gas pressure difference between the inlet region of the metering device (1) and the outlet region of the metering device (1) that can be adjusted by means of the adjustable pressure control device (2') corresponds to a specifiable maximum value between 0.01 bar inclusive and 2.00 bar inclusive.

14. Method according to Claim 13, wherein the gas flow (100) is formed by a gas or a gas mixture, wherein, for a given gas passage cross section of the gas passage opening (35) and for the gas or the gas mixture, reference data, in particular a profile curve of the gas flow (100) in dependence on the measured gas pressure difference across the gas passage opening (35), are determined, wherein the electrically activatable valve (10') is activated and/or adjusted in dependence on the reference data in such a manner that the gas pressure difference that is established across the gas passage opening (35) corresponds to a selectable gas flow.

15. Method according to either of Claims 13 and 14, wherein the adjustable pressure control device (2') is adjusted, and in particular fixed, in particular by means of a test and/or calibration apparatus and in particular by means of the adjusting means (5), in such a manner that, in the case of a fully open position of the electrically activatable valve (10'), the maximum gas pressure difference between the inlet region and the outlet region that can be adjusted is present.

## Revendications

1. Agencement d'appareil ménager, comprenant un appareil ménager (7) et un dispositif de dosage (1) pour régler et/ou réguler un débit de gaz (100), dans lequel le dispositif de dosage (1) permet de régler un débit massique de gaz dans la plage de 0 à 10 g/min, le dispositif de dosage (1) comprenant une vanne (10') à pilotage électrique, dans lequel le débit de gaz (100) à travers le dispositif de dosage (1) peut être réglé et/ou régulé à l'aide de la vanne (10') à pilotage électrique, dans lequel le dispositif de dosage (1) présente un capteur de pression (20), et dans lequel le dispositif de dosage (1) comprend un dispositif de régulation de pression (2') réglable,
**caractérisé en ce que** le capteur de pression (20) permet de mesurer une différence de pression de gaz à travers une ouverture de passage de gaz (35) du dispositif de dosage (1), la vanne (10') à pilotage électrique étant réglable en fonction de la différence de pression de gaz mesurée ;
dans lequel, le dispositif de régulation de pression (2') réglable permet de régler une différence de pression de gaz maximale entre une zone d'entrée du dispositif de dosage (1) et une zone de sortie du dispositif de dosage (1), dans lequel le débit de gaz (100) à travers le dispositif de dosage (1) réglable à l'aide de la vanne (10') à pilotage électrique est limité par la différence de pression de gaz maximale réglée à l'aide du dispositif de régulation de pression (2') réglable entre la zone d'entrée du dispositif de dosage (1) et la zone de sortie du dispositif de dosage (1), dans lequel la différence de pression de gaz maximale réglable à l'aide du dispositif de régulation de pression (2') réglable entre la zone d'entrée du dispositif de dosage (1) et la zone de sortie du dispositif de dosage (1) correspond à une valeur maximale définissable comprise entre 0,01 bar inclus et 2,00 bar inclus.

2. Agencement d'appareil ménager selon la revendication 1, dans lequel le dispositif de régulation de pression (2') réglable est réalisé à l'aide d'une membrane (2) réglable et/ou à l'aide d'un piston réglable.

3. Agencement d'appareil ménager selon l'une quelconque des revendications précédentes, dans lequel le dispositif de régulation de pression réglable, en particulier la membrane (2) réglable et/ou le piston réglable, est réglable mécaniquement à l'aide d'un moyen d'ajustage (5), en particulier de telle sorte que la différence de pression de gaz maximale entre la zone d'entrée du dispositif de dosage (1) et la zone de sortie du dispositif de dosage (1) peut être réglée par l'intermédiaire du moyen d'ajustage (5).

4. Agencement d'appareil ménager selon l'une quelconque des revendications précédentes, dans lequel la vanne à pilotage électrique, en particulier en fonction de la différence de pression de gaz mesurée, est réglable de telle sorte qu'une valeur cible est réglable pour la différence de pression de gaz à travers l'ouverture de passage de gaz (35) et/ou qu'une valeur cible pour le débit de gaz (100) à travers le dispositif de dosage (1), en particulier à travers l'ouverture de passage de gaz (35), est réglable.

5. Agencement d'appareil ménager selon l'une quelconque des revendications précédentes, dans lequel le débit de gaz (100) à travers le dispositif de dosage (1) peut être établi et/ou réglé à l'aide de données de référence, les données de référence concernant en particulier une relation entre la différence de pression de gaz à travers l'ouverture de passage de gaz (35) et le débit de gaz (100) à travers le dispositif de dosage (1) .

6. Agencement d'appareil ménager selon l'une quelconque des revendications précédentes, dans lequel la vanne (10') à pilotage électrique comprend ou est une électrovanne (10).

7. Agencement d'appareil ménager selon l'une quelconque des revendications précédentes, dans lequel la vanne (10') à pilotage électrique, en particulier l'électrovanne (10), peut être pilotée à l'aide d'un dispositif de commande.

8. Agencement d'appareil ménager selon la revendication 7, dans lequel l'électrovanne (10) présente une vanne 2/2 voies qui peut être pilotée à l'aide du dispositif de commande à une fréquence, en particulier fixe ou variable, et une durée d'enclenchement variable, en particulier de telle sorte que le débit de gaz (100) à travers le dispositif de dosage (1) peut être réglé à l'aide d'une sélection de la durée d'enclenchement, ou dans lequel l'électrovanne (10) présente une vanne proportionnelle 2/2 voies pour laquelle un pilotage à l'aide du dispositif de commande permet de régler une section transversale d'ouverture variable au niveau du siège de vanne de l'électrovanne (10), en particulier de telle sorte que le débit de gaz (100) à travers le dispositif de dosage (1) peut être réglé à l'aide d'une sélection de la section transversale d'ouverture au niveau du siège de vanne.

9. Agencement d'appareil électroménager selon l'une quelconque des revendications précédentes, dans lequel la différence de pression de gaz maximale réglable est déterminée en fonction d'un débit de gaz (100) maximal sélectionnable.

10. Agencement d'appareil électroménager selon l'une quelconque des revendications précédentes, dans lequel le dispositif de dosage (1) comprend un clapet antiretour (60) .

11. Agencement d'appareil ménager selon l'une quelconque des revendications précédentes, dans lequel l'appareil ménager (7) est une machine de préparation de boisson, dans lequel une boisson et/ou une substance préliminaire pour la préparation d'une boisson peut être mélangée à l'aide du dispositif de dosage (1) à un gaz ou à un mélange de gaz, en particulier du CO₂, le débit de gaz (100) du gaz ou du mélange de gaz étant réglable à l'aide du dispositif de dosage (1).

12. Agencement d'appareil ménager selon l'une quelconque des revendications précédentes, dans lequel l'appareil ménager (7) est un dispositif de gril à gaz, le dispositif de dosage (1) permettant de régler un débit de gaz (100) du dispositif de gril à gaz.

13. Procédé permettant de régler et/ou de réguler un débit de gaz (100) à l'aide d'un dispositif de dosage (1) d'un agencement d'appareil ménager selon l'une quelconque des revendications précédentes, dans lequel le dispositif de dosage (1) permet de régler un débit massique de gaz dans la plage de 0 à 10 g/min, dans lequel le dispositif de dosage (1) présente un capteur de pression (20), dans lequel le capteur de pression (20) permet de mesurer une différence de pression de gaz à travers une ouverture de passage de gaz (35) du dispositif de dosage (1), dans lequel la vanne (10') à pilotage électrique est réglée en fonction de la différence de pression de gaz mesurée ; et dans lequel le dispositif de dosage (1) comprend un dispositif de régulation de pression (2') réglable, dans lequel le dispositif de régulation de pression (2') réglable permet de régler une différence de pression de gaz maximale entre une zone d'entrée du dispositif de dosage (1) et une zone de sortie du dispositif de dosage (1), dans lequel le débit de gaz (100) à travers le dispositif de dosage (1) réglable à l'aide de la vanne (10') à pilotage électrique est limité par la différence de pression de gaz maximale réglée à l'aide du dispositif de régulation de pression (2') réglable entre la zone d'entrée du dispositif de dosage (1) et la zone de sortie du dispositif de dosage (1), dans lequel la différence de pression de gaz maximale réglable à l'aide du dispositif de régulation de pression (2') réglable entre la zone d'entrée du dispositif de dosage (1) et la zone de sortie du dispositif de dosage (1) correspond à une valeur maximale définissable comprise entre 0,01 bar inclus et 2,00 bar inclus.

14. Procédé selon la revendication 13, dans lequel le débit de gaz (100) est formé par un gaz ou un mélange de gaz, dans lequel pour une section transversale de passage de gaz donnée de l'ouverture de passage de gaz (35) et pour le gaz ou le mélange de gaz, des données de référence, en particulier une courbe d'évolution du débit de gaz (100) en fonction de la différence de pression de gaz mesurée à travers l'ouverture de passage de gaz (35), sont établies, dans lequel la vanne (10') à pilotage électrique est pilotée et/ou réglée en fonction des données de référence de telle sorte que la différence de pression de gaz à travers l'ouverture de passage de gaz (35) qui se produit correspond à un débit de gaz sélectionnable.

15. Procédé selon l'une quelconque des revendications 13 ou 14, dans lequel le dispositif de régulation de pression (2') réglable est réglé, et en particulier fixé, en particulier à l'aide d'un dispositif de contrôle et/ou d'étalonnage et en particulier à l'aide du moyen d'ajustage (5), de telle sorte que dans une position entièrement ouverte de la vanne (10') à pilotage électrique, la différence de pression de gaz maximale réglable est présente entre la zone d'entrée et la zone de sortie.
